# EUROPEAN PATENT APPLICATION

(11) **EP 4 438 783 A1**
(43) Date of publication of application: **02.10.2024**
(21) Application number: 23164287.7
(22) Date of filing: 27.03.2023
(51) Int. Cl.: D04H 1/4234, B01D 39/06, B01D 39/20, B22F 1/062, B22F 3/00, H01M 4/80

(54) **THREE-DIMENSIONAL (3D) NETWORK OF METAL FIBERS, AND PRODUCTION METHOD**

(71) Applicant: batene GmbH, 73240 Wendlingen am Neckar (DE); Max-Planck-Gesellschaft zur Förderung der Wissenschaften e.V., 80539 München (DE)
(72) Inventor: Jeschenko, Pascal Max, 70176 Stuttgart (DE); Spatz, Joachim, 70569 Stuttgart (DE); Tenbusch, Jan, 70178 Stuttgart (DE); Möller, Martin, 52070 Aachen (DE)
(74) Representative: Manitz Finsterwald Patent- und Rechtsanwaltspartnerschaft mbB

(57) **Abstract**

The present invention concerns a three-dimensional (3D) network of metal fibers comprising a plurality of metal fibers and a metallic compound, an electrode having said three-dimensional (3D) network of metal fibers, a battery comprising said electrode, a filter having said three-dimensional (3D) network of metal fibers, a catalyst having said three-dimensional (3D) network of metal fibers, and a method of producing a three-dimensional (3D) network of metal fibers by electroless deposition.

## Description

The present invention relates to a three-dimensional (3D) network of metal fibers, e.g. in the form of a nonwoven, a method for manufacturing such a three-dimensional (3D) network of metal fibers, an electrode having such a three-dimensional (3D) network of metal fibers, a filter having such a three-dimensional (3D) network of metal fibers, a catalyst having such a three-dimensional (3D) network of metal fibers, and a battery comprising an electrode having such a three-dimensional (3D) network of metal fibers.

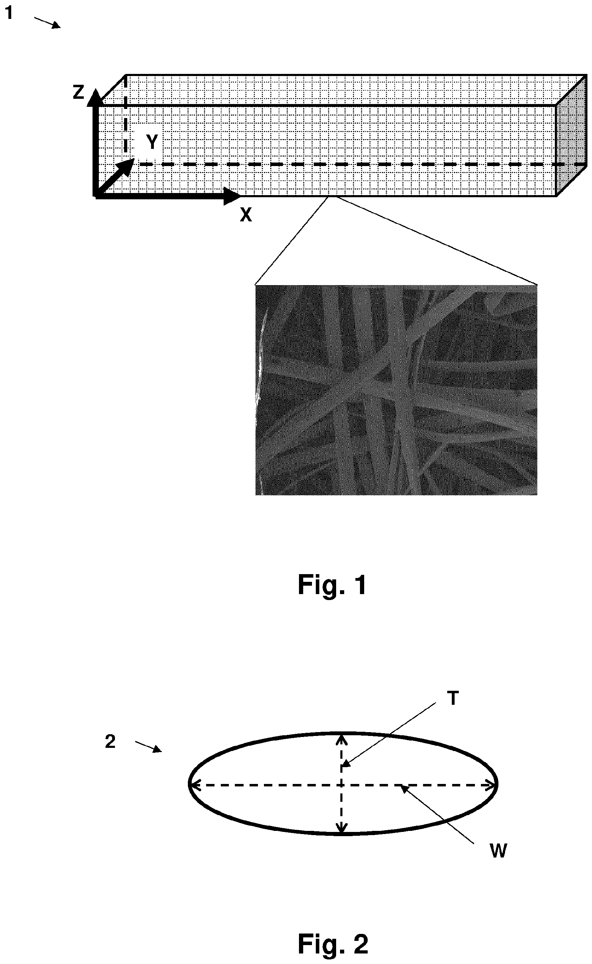

Three-dimensional (3D) structures, such as networks of metal fibers have advantageous properties in several technological fields, such as filters, catalysts and electrodes, in particular electrodes for batteries. Especially very fine fibers, such as microfibers with thicknesses and/or widths in the range of 50 µm or less (see Fig. 2 for thickness and/or width of a microfiber) provide very large surface to volume ratios and corresponding surface areas which was found advantageous for example for electrode applications. Further, the surface area is even higher when such thin fibers have a non-round cross-section, e.g. ribbon like cross sections. Also, for filter applications, such networks with fibers having a non-round cross-section, e.g. ribbon like cross sections, were found to have better filtering properties, presumably due to turbulences caused by the shape of fibers having such non-round cross-sections.

For producing such networks, metal fibers can be laid into an electrically conductive and strong nonwoven using various processes (dry and wet) known to the skilled person. For the bonding of such nonwovens, processes such as sintering at temperatures close to or above the melting point are used. The production of such networks of metal fibers is known to the skilled person e.g. from WO2020/016240 A1, the entire content thereof is herewith incorporated by reference. Metal fibers can be produced by melt spinning, as described for example in WO2016/020493 A1 and in WO2020/229400 A1, the entire content of these references is incorporated herein by reference.

However, the stability of 3D networks of metal fibers having such non-round cross-sections against compression for example during preparation of the 3D networks or when loading the networks with active electrode material may be not sufficient to prevent a shrinkage of the thickness of the network (z-axis shown in Fig. 1). In particular, such nonwoven networks can only be handled with very elaborate precautions when being made from relatively short and fine fibers, to prevent them from falling apart and from shrinkage in the thickness of the web (z-axis shown in Fig. 1), e.g. during sintering or during coating with active electrode material.

In particular with regard to microfibers with thicknesses and/or widths in the range of 50 µm or less which have non-round cross-sections, the common manufacturing process of sintering at temperatures close to or above the melting point of the metal fibers displays a problem when it comes to being stable against said compression, and being able to retain said non-round cross-sections of the metal fibers. The driving force in sintering of particularly thin, non-round fibers obtained from a melt spinning process into a nonwoven lies in the surface reduction and the energy released as a result. With very thin fibers, the temperature range in which the fibers can bond and retain their non-round cross-sectional shape is challenging to implement experimentally. When approaching the melting temperature, the fibers lose their shape, become round and the stored energy is released, as described for example in EP 4 000 710 A1, the entire content of this reference is incorporated herein by reference.

3D networks of metal fibers with electrically conductive links, which are used as electric current collectors in lithium-ion batteries enable very thick electrodes when they get filled with the respective active material. Such thick electrodes can provide an area loading of 100 mAh/cm² or more. Such electrodes constructed with a 3D metal fiber network enable large currents towards the power socket in 3 dimensions, but also regarding the ion mobility within the electrode itself (also described in patent application WO 2022/237967 A1, the entire content thereof is herewith incorporated by reference). This is in particular of interest, when the electrode is a battery electrode and the battery is subjected to fast charging or discharging cycles.

Especially when using very fine fibers, each individual fiber can only handle a certain current due the small conductor cross-section. When the current is too high, it is possible that individual fibers are destroyed. Repeated use may result in more and more damages to the network of metal fibers and thereby gradually deteriorate the function thereof. Furthermore, when being used in a battery, a high temperature may occur at individual fibers having a high current load. This may result in a degradation of the active material and/or the electrolyte. To reduce the current load on individual fibers, it is therefore important that the fibers form a conductive network so that the current is distributed over many fibers.

Accordingly, there is a problem that existing network structures have a limited stability when subjected repeatedly to electric currents, such as in battery electrodes, and that such networks of metal fibers are limited in regard to their thickness and that during formation of the network by thermal sintering of the fibers to one another, the fibers easily lose a non-round, e.g. ribbon like, shape and are transformed into a fiber with a round cross section.

This problem is solved by the present invention by providing a three-dimensional (3D) network of metal fibers according to claim 1. In particular, the 3D network of metal fibers of the present invention comprises a plurality of metal fibers and a metallic compound, wherein the plurality of metal fibers are fixed to one another by the metallic compound, and wherein the metal fibers are electrically conductively connected to one another.

The 3D network according to the present invention has a substantially open porous structure, i.e., a network comprising dead-end pores, open pores, and closed pores, and wherein a ratio of a total amount of the closed pores is smaller than a total amount of at least the open pores, preferably wherein a ratio of a total amount of the closed pores is smaller than a total amount of at least the open pores and the dead-end pores. In a preferred embodiment, the 3D network according to the present invention has an open porous structure, i.e. having substantially no closed pores or no closed pores at all. In contrast to metal foam materials, which often have closed pores, at least to a certain degree, the network of the present invention, is for example in the form of a nonwoven, and is substantially free of closed pores. Thereby entrapping of metals, such as lithium, is avoided, which in turn results in an improved efficiency of the battery. It is to be understood that the 3D network of metal fibers according to the present invention is different from a metal foam material.

The metal fibers, which preferably form a nonwoven, are mechanically and electrically conductively connected to one another by the metallic compound. As used herein, "mechanically connected" means that the metal fibers are connected such that they mechanically stabilize the overall 3D network. In other words, the mechanical load on individual fibers is reduced when the network is subjected to mechanical stress. As used herein, "electrically conductively connected" means that the metal fibers are connected such that they form a 3D network which is electrically conductively stabilized. In other words, the electrical load on individual fibers is reduced in case a current is applied to the 3D network.

Based on the combination of mechanical and electrical stabilization, the mechanical load and the electric current load on individual fibers are reduced. As a result, the life-time of a battery, in particular when subjected to fast charging and discharging cycles, can be increased.

The metal fibers are at least partially covered, i.e., coated or plated, with the metallic compound. In addition, a fixation of the plurality of metal fibers is enabled by the metallic compound. This fixation is locally and multiply present throughout the 3D network of the present invention. On a microscopic level, at least two (2) metal fibers are connected by the metallic compound. Each one of the at least two (2) metal fibers may have a plurality of sections which are connected to a section of at least one other metal fiber by the metallic compound. It is also possible that a section of a metal fiber is connected to another section of the same metal fiber. However, from a mechanical and electrical stability point of view, it is preferred that a section of a metal fiber is connected to a section of another metal fiber. The connected sections of at least two (2) metal fibers are also referred to as "linking points" or "point of contact". At these linking points, the metallic compound at least partially covers both sections of the at least two (2) metal fibers, thereby joining both sections together. On a microscopic level, these linking points may resemble a spherical particle, such as a node or clot, joining both sections. The metallic compound may also link three (3), four (4), five (5) or at least six (6) metal fibers at the same linking point.

The present invention further concerns a method of producing a three-dimensional (3D) network of metal fibers by electroless deposition, comprising the steps of:
Step A: providing a plurality of metal fibers,
Step B: providing a mixture comprising metal cations and a reducing agent capable of reducing the metal cations,
Step C: subjecting the plurality of metal fibers to the mixture, and
Step D: depositing the metal cations in the form of reduced metals on the plurality of metal fibers, thereby providing the three-dimensional (3D) network of metal fibers.

Electroless deposition (also known as "electroless plating", "chemical plating" or "autocatalytic plating") is a common method and is as such known to the skilled person. By applying electroless deposition in step D, a three-dimensional (3D) network is generated in which metal fibers are fixed to one another by a metallic compound. The electroless deposition process provides for 3D networks, wherein the metal fibers at least substantially retain their shape. The microstructure of the metal fibers is therefore at least partially not destroyed upon subjecting thereof to the herein described electroless plating method. In contrast to sintering close to or above the melting temperature of the metal fibers, the herein described manufacturing process of a 3D network by electroless deposition requires lower temperatures. Thereby, the fixation of the metal fibers in order to form a porous 3D network may already be achieved at milder reaction conditions, in particular at milder reaction temperatures. This gentler production method may therefore especially be useful for the provision of 3D networks which are required to have very thin metal fibers, and in particular very thin metal fibers having non-round cross-sections. It is therefore possible to provide for 3D networks of metal fibers having non-round cross sections, and thicknesses and/or widths in the range of 50 µm or less. The electroless plating process of a metallic compound onto metal fibers may even terminate within a shorter period of reaction time when thin fibers are used. Three-dimensional networks having such shaped metal fibers are characterized by their large surface area, thereby realizing advantageous applications where a high surface area is required for chemical and/or physical interactions, in particular chemical reactions. In the present invention, the morphology of the metal fibers is, however, not limited to having a non-round cross section. It is also possible and preferred to provide for 3D networks of metal fibers having round cross sections, although the contact area between these round fibers is smaller with regard to metal fibers having a non-round cross section. The fixation by electroless deposition using a metallic compound enables the metal fibers being electrically conductively and mechanically coupled to one another. In particular, the use of the metallic compound may further increase mechanical stabilization of the network by forming alloy sections which will be described in more detail below. Furthermore, the electroless plating of a metallic compound onto metal fibers may reduce the electrical resistance of the metal fibers, thereby promoting the electrical stabilization of the 3D network. Thus, the above described stabilization in regard to mechanical and electrical load can be achieved when a 3D network is produced in accordance with the present invention. The chemical autocatalytic reaction behind the electroless plating process may be simplified by means of equation (1):

**M^{z+}_{(aq)} + X^{z-}_{(aq)} → M⁰₍ₛ₎ + Z** ₍₁₎

wherein M^{Z+} is a metal cation to be reduced to metallic compound M⁰ which is thereby plated in a solid form onto the metal fibers of the 3D network; X^{Z-} is a reducing agent capable of reducing M^{Z+} in a plating solution known to the skilled person, such as an aqueous (short as: aq) solution as shown above; and Z representing oxidized side products obtained during the reaction in a solid, liquid and/or gaseous form. The mixture in Step B of the method in accordance with the present invention therefore refers to a mixture, wherein at least the metal cations and the reducing agent are soluble. In other words, the mixture is preferably a solution, more preferably an aqueous solution. More preferably, the mixture is a (aqueous) solution, in which the metal cations, the reducing agent and additives, such as a complexing agent, are dissolved.

The present invention further relates to a three-dimensional (3D) network of metal fibers obtainable by a method according to the present invention. By the method according to the present invention, a three-dimensional (3D) network as described above, is manufactured at mild conditions, so that the final 3D network of metal fibers can be obtained without changing the shape of the metal fibers. The metal fibers are connected to one another by the metallic compound deposited by electroless plating of Step D of the method of the present invention.

Further, the present invention concerns an electrode having a three-dimensional (3D) network of metal fibers according to the present invention.

The herein described network is three-dimensional and porous, hence a nonwoven having a large surface required for electrode applications. Especially very fine fibers, such as microfibers with thicknesses and/or widths in the range of 50 µm or less (see Fig. 2 for thickness and/or width of a microfiber) provide very large surface to volume ratios and corresponding surface areas which was found advantageous for example for electrode applications. Further, the surface area is even higher when such thin fibers have a non-round cross-section, e.g. ribbon like cross sections.

Further, the present invention concerns a battery comprising at least one electrode having a network structure according to the present invention.

Based on the combination of mechanical and electrical stabilization, the mechanical load and the electric current load on individual fibers are reduced. Further, the large surface area of the 3D metal fiber network obtainable by the method of the present invention provides for a large energy density and can be advantageous for suppressing dendrite growth in lithium-metal batteries. Thereby, the life-time of the battery, in particular when subjected to fast charging and discharging cycles, can be increased.

Still further, the present invention concerns a filter having a three-dimensional (3D) network of metal fibers according to the present invention.

The herein described network is three-dimensional and porous, hence a nonwoven having a large surface required for filter applications. Especially very fine fibers, such as microfibers with thicknesses and/or widths in the range of 50 µm or less (see Fig. 2 for thickness and/or width of a microfiber) provide very large surface to volume ratios and corresponding surface areas which was found advantageous for example for electrode applications. Further, the surface area is even higher when such thin fibers have a non-round cross-section, e.g. ribbon like cross sections. For filter applications, such networks with fibers having a non-round cross-section, e.g. ribbon like cross sections, were found to have better filtering properties, presumably due to turbulences caused by the shape of fibers having such non-round cross-sections.

Still further, the present invention concerns a catalyst having a three-dimensional (3D) network of metal fibers according to the present invention.

The herein described network is three-dimensional and porous, hence it provides a large surface required for catalysis applications. Especially very fine fibers, such as microfibers with thicknesses and/or widths in the range of 50 µm or less (see Fig. 2 for thickness and/or width of a microfiber) provide very large surface to volume ratios and corresponding surface areas which was found advantageous for example for electrode applications. Further, the surface area is even higher when such thin fibers have a non-round cross-section, e.g. ribbon like cross sections.

In the following preferred embodiments of the present invention are described:
In a preferred embodiment, the at least one part of the plurality of metal fibers has a width and/or thickness of 80 µm or less, more preferably of 70 µm or less, even more preferably of 50 µm, even more preferably of 40 µm or less, even more preferably of 30 µm or less, still more preferably of 10 µm or less, and most preferably of 5.0 µm or less. With such thin fibers, a large surface area may be provided, resulting in advantageous filter, catalytic and especially electrochemical properties and suppressing growth of lithium dendrites when the network structure is used as an electrode in a lithium ion battery, in particular in a lithium-metal battery. In the network structure of the present invention the lower limit of the width and/or thickness of the at least one part of the plurality of metal fibers is not particularly limited. In a preferred embodiment of the invention it may be 1.0 µm or less. Fibers having a lower width and/or thickness may be difficult to produce, e.g. by melt spinning, and difficult to handle.

It is preferable that the at least one part of the plurality of metal fibers have a length of 1.0 mm or more, more preferable of 2.0 mm or more, and even more preferable of 5.0 mm or more, and even more preferable of 7.0 mm or more. It is further preferable that the at least one part of the plurality of metal fibers have a length of 100 mm or less, more preferable of 50 mm or less, and even more preferable of 20 mm or less, and even more preferable of 10 mm or less. With the length of the metal fibers fulfilling the above length specification, mechanical stability of the 3D network of metal fibers is improved, since due to the increased length of the metal fibers, each metal fiber can have several points of contact to other metal fibers of the network where it is fixed to the respective other metal fibers to form a mechanically strong and electrically conductive connection there between. Therefore, when one connection between metal fibers breaks, this does not compromise the overall structural integrity of the network or separate a metal fiber from the network, since several other connections between the fibers are available, to hold the network together and provide the desired electrical conductivity. With the length of the metal fibers fulfilling the above length specification, it is also possible to reduce the amount of metal fibers forming knots with one another during a nonwoven laying process which may involve carding.

The 3D network of metal fibers of the present invention preferably has a thickness of 250 µm or more, more preferably a thickness of 500 µm or more, even more preferably a thickness of 1000 µm or more, even further more preferably a thickness of 2500 µm or more, particularly preferably a thickness of 3000 µm or more, and most preferably a thickness of 5000 µm or more. Since the network of the present invention can be obtained without heating the network structure close to the melting point of the metal fibers, a shrinking of the network due to softening of the fibers when being close to the melting point does not occur. Therefore, the network of the present invention can be manufactured with very high thicknesses. Such high thicknesses are particularly suitable for applications such as filters or thick electrodes.

In another preferred embodiment, at least one part of the plurality of metal fibers has a non-round cross-section, in particular a ribbon like cross-section. In other words, the at least one part of the plurality of metal fibers has a cross-sectional shape which is non-round, i.e. the at least one part of the plurality of metal fibers is ribbon-like. The cross-section of the at least one part of the plurality of metal fibers is not particularly limited. The ribbon-like fibers provide a large surface area per mass, providing the desired functionality. In particular, such a non-round cross-section provides for a large surface area, which may be advantageous for filtering applications, due to turbulences caused by the non-round cross-section in a fluid flowing through the filter. Such a non-round cross-section may also be beneficial when used for catalytic applications. It is possible that the catalytic sites (based on organic, organometallic or inorganic compounds) may chemically or physically bond to the thereby generated large surface of the non-round cross-sectioned metal fibers, so that the turnover number may be increased. In particular, 3D networks having a smaller macroscopic surface (i.e., total surface of the network as such as viewed with the bare eye) may be used in view of the herein described larger microscopic surface of the 3D network (i.e., total surface of the individual metal fibers within the 3D network). When being used in a battery electrode, the fibers having a non-round cross-section increase the surface area of the electrode material, thereby improving the electrochemical properties of the electrode and the suppression of lithium dendrite growth for example in lithium ion batteries, in particular in lithium-metal batteries.

In another preferred embodiment, the metal fibers are based on copper, aluminum or titanium. In particular, the 3D network is made of metal fibers which are based on copper or aluminum. As used herein, "based on copper" means that the material comprises copper to an extent of at least 80 wt.-%, in particular of at least 90 wt.-%. As used herein, "based on aluminum" means that the material comprises aluminum to an extent of at least 80 wt.-%, in particular of at least 90 wt.-%. As used herein, "based on titanium" means that the material comprises titanium to an extent of at least 80 wt.-%, in particular of at least 90 wt.-%. In these cases, the remainder may be other elements.

In another preferred embodiment, the metallic compound is based on gold, silver, copper, nickel (e.g., NiP), antimony, tin or lead. In particular, the metallic compound is based on copper or nickel. As used herein, "based on gold" means that the material comprises gold to an extent of at least 80 wt.-%, in particular of at least 90 wt.-%. As used herein, "based on silver" means that the material comprises silver to an extent of at least 80 wt.-%, in particular of at least 90 wt.-%. As used herein, "based on nickel" means that the material comprises nickel to an extent of at least 80 wt.-%, in particular of at least 90 wt.-%. As used herein, "based on antimony" means that the material comprises antimony to an extent of at least 80 wt.-%, in particular of at least 90 wt.-%. As used herein, "based on tin" means that the material comprises tin to an extent of at least 80 wt.-%, in particular of at least 90 wt.-%. As used herein, "based on lead" means that the material comprises lead to an extent of at least 80 wt.-%, in particular of at least 90 wt.-%. In these cases, the remainder may be other elements. As used herein, "based on gold, silver, copper, nickel (e.g., NiP), antimony, tin and lead, respectively" means that the material comprises an element other than gold, silver, copper, nickel, antimony, tin and lead, respectively, of 20 wt.-% or less. Said further element may be metallic or non-metallic. For example, "based on nickel" may mean that the material comprises an element other than nickel to an extent of 20 wt.-% or less, wherein said element is phosphorus.

In another preferred embodiment, the elemental composition of the metallic compound and of the metal fibers are different from one another. For example, the metallic compound (e.g., Cu) and the metal fibers may both be copper-based (e.g., CuSi), as described above. In this case, the elemental composition of the copper-based metallic compound is preferably different to that of the copper-based metal fibers. This also applies for other combinations of metal fibers and metallic compounds, wherein both are based on the same metal. When the elemental composition of the metallic compound and the metal fibers are different from one another, an increased mechanical stability may be achieved. That way, it is possible to form alloy sections at the linking point of at least two (2) metal fibers, without risking a shape change of the metal fibers, as described in more detail below.

In another preferred embodiment, the 3D network of the present invention further comprises an alloy section at a point of contact of at least two metal fibers, fixating said least two metal fibers to one another. The presence of an alloy section in the 3D network may at least partially add the chemical and physical properties of an alloy to those of the 3D network without an alloy section. The fixation via an alloy section may for example strengthen the connection between the metal fibers, increase the contact area of the metal fiber sections at the linking points, and/or further increase the mechanical stability of a 3D network described above. Also, the electrical conductivity of the 3D network may be increased, and/or the workability of the porous structure may be influenced in a positive manner. At least one of these effects may be beneficial in more effectively achieving the desired functionality of the 3D network. According to this embodiment, the linking points, i.e., points of contact, of two sections of at least two (2) metal fibers may comprise an alloy section. That is, in addition to the linking point already formed by using the metallic compound as described above, it is possible that the linking point may further comprise an alloy section. The alloy section is an alloy formed from the metals of the metallic compound and the metal fibers. For example, a 3D network comprising a nickel-based metallic compound (e.g., NiP) and aluminum-based metal fibers (e.g., Al) may comprise Al₃Ni-based alloy sections at the linking points. As used herein, "based on Al₃Ni" means that the alloy comprises Al₃Ni to an extent of at least 80 wt.-%, in particular of at least 90 wt.-%.

In another preferred embodiment, the metallic compound comprises at least one element being capable of forming a eutectic with at least one element contained in the plurality of metal fibers. Thereby, a eutectic alloy may be formed representing a particular embodiment of the aforementioned formation of a general alloy. Eutectic alloys are known in the art. For example, a 3D network comprising Al-based metal fibers and a NiP-based metallic compound may further comprise an Al₃Ni-based eutectic alloy at the linking points, wherein the melting point of the alloy (639.9 °C) is lower than that of aluminum (660 °C). Said example may apply for a 3D network comprising metal fibers and metallic compound other than Al and NiP. The presence of a eutectic alloy is particularly preferred due to its lower melting temperature compared to that of alloys having another mixing ratio (not-eutectic alloys). That way, eutectic alloys may be formed at lower temperatures than the melting point of the actual fibers. Thereby, the fibers can be fixed to one another by the formation of said eutectic alloy in a soldering like manner. Since the temperature can be kept below the melting point of the actual metal fiber material, the risk of the metal fibers changing their shape from e.g. ribbon like to round, is low.

In another preferred embodiment, the redox potential of a metal contained in the metallic compound is equal to or higher than the redox potential of a metal contained in the plurality of metal fibers. In other words, the metal of the metallic compound is equally noble or more noble than the metal contained in the metal fibers. The redox potential is measured under standard temperature and pressure (STP) conditions, thereby also referred to as standard electrode potential. For example, with regard to a 3D network comprising a Ni-based metallic compound and Al-based metal fibers, the standard electrode potential of Ni E°(Ni) is -0.72 V, hence higher than that of Al E°(Al) being -1.66 V.

In another preferred embodiment, the metallic compound is present in the form of a spherical particle, preferably wherein the spherical particle has an arithmetic mean diameter of 500 nm or less. The metallic compound in the form of a spherical particle joins the at least two metal fibers at the linking points. The spherical particle may have an arithmetic mean diameter of 400 nm or less, or 300 nm or less. In the network structure of the present invention the lower limit of the arithmetic mean diameter of the metallic compound in the form of a spherical particle is not particularly limited. In a preferred embodiment of the invention it may be 50 nm or more. Spherical particles having a lower arithmetic mean diameter may not suffice to further strengthen the connection between the metallic compound and the metal fibers.

In a preferred embodiment, the metal fibers are copper-based fibers, and the metallic compound is copper-based. In a particularly preferred embodiment, the metal fibers are copper-silicon (CuSi) fibers or copper (Cu) fibers, and the metallic compound is copper (Cu).

In another preferred embodiment, the metal fibers are aluminum-based fibers, and the metallic compound is nickel (Ni)-based or nickel-phosphorus (NiP)-based. In a particularly preferred embodiment, the metal fibers are aluminum (Al) fibers, and the metallic compound is nickel (Ni) or nickel-phosphorus (NiP).

In another preferred embodiment, the metal fibers are aluminum nickel (AlNi) fibers and the metallic compound is nickel (Ni) or nickel phosphorus (NiP).

In another preferred embodiment, the metal fibers are titanium-based (Ti) fibers, in particular titanium (Ti) fibers, and the metallic compound is nickel (Ni) or nickel phosphorus (NiP).

In the three-dimensional (3D) network of metal fibers according to the invention it is preferred that in the network a majority of the metal fibers is in contact with one or more of the other metal fibers. This ensures that a high electrical conductivity is provided throughout the network.

It is further preferred, that the network is an unordered network, i.e., random spatial distributions of the metal fibers. Such an unordered network has a good electrical conductivity in every direction. Moreover, it is easier to produce an unordered network of metal fibers, compared to an ordered network of fibers. It is preferred that the entire 3D network is unordered. In particular the network is a nonwoven. In the nonwoven the fibers are unordered or ordered, e.g. due to carding of metal fibers.

Preferably, the 3D network of the present invention is part of an electrode, preferably a battery electrode, a filter and or a catalyst.

Herein, all of the preferred embodiments and features described above or in the claims for the 3D network itself apply *mutatis mutandis* to the method of producing a 3D network.

The herein described method of electroless deposition, i.e., electroless plating, is a method which requires no electric current, voltage and/or electric power for depositing, i.e., plating the metal cations in the form of reduced metals on the plurality of metal fibers.

In one embodiment, the method in accordance with the present invention may further comprise Step C0 prior to Step C, wherein Step C0 is a cleansing treatment of the plurality of metal fibers. Cleansing of the metal fibers prior to subjecting the reduction reaction in Step C has the advantage of exposing more surface area of the metal fibers for the reaction in Step C. This is the case for when the surface of the metal fibers contains impurities, an oxide layer and the like. Cleansing may therefore remove impurities or an oxide layer from the surface of the metal fibers, wherein the oxide layer which may be naturally formed during storage of metal fibers. By cleansing the metal fibers, the surface thereof may be increased such that a higher number of metallic compounds may be plated on the fibers. In a preferred embodiment, the cleansing treatment is a treatment of the plurality of metal fibers with an oxoacid (also referred to as "oxyacid" or "ternary acid". The oxoacid may be inorganic or organic, preferably inorganic. The inorganic oxoacid may be selected from the group consisting of sulfur-based oxoacids, such as sulfuric acid (H₂SO₄) or sulfurous acid (H₂SO₃); phosphorus-based oxoacids, such as phosphoric acid (H₃PO₄) or phosphorus acid (H₃PO₃) or hypophosphorus acid (H₃PO₂); nitrogen-based oxoacids, such as nitric acid (HNO₃) or nitrous acid (HNO₂), a salt thereof, or a combination thereof. It is preferred that the cleansing treatment is performed with an oxoacid being sulfuric acid or phosphoric acid. The organic oxoacid may be selected from the group consisting of a carboxylic acid, a phenol, a salt thereof, or a combination thereof. The cleansing step is not essential for the electroless plating method, however subjecting the metal fibers to cleansing results in a more homogenous deposition of the metallic compound onto the metal fibers as more metal fiber surface may be exposed for the metallic compound to be plated on.

In another embodiment, the method in accordance with the present invention may further comprise Step E being a thermal treatment of the 3D network of metal fibers obtained in Step D. The thermal treatment of the 3D network is preferably performed at a temperature below the melting point of the metal fibers. Depending on the 3D network composition and the kind of thermal treatment, the thermal treatment may be performed at a temperature of 90% of the melting temperature of the metal fibers as described below in more detail. That way, the metal fibers may retain their shape, in particular their non-round cross-sections. By thermally treating the 3D network obtained in step D, it is aimed at ameliorating the functionality of the 3D network, such as by enhancing the mechanical stability of the 3D network and/or increasing the electrical conductivity thereof. For example, Step E may be directed to a thermal treatment of a 3D network of Cu-based fibers deposited by Cu as metallic compound, wherein said 3D network may have an improved mechanical stability with regard to a 3D network of Cu-based fibers deposited by Cu as metallic compound that was not objected to a thermal treatment of Step E. Alternatively, by thermally treating the 3D network obtained in step D, it may be aimed at forming an alloy at the linking points, thereby ameliorating the functionality of the 3D network, such as by enhancing the mechanical stability of the 3D network and/or increasing the electrical conductivity thereof. In a preferred embodiment, an alloy is formed during step E between the metal fibers and the metallic compound, wherein the alloy has a lower melting point than the metal fibers. In a more preferred embodiment, a eutectic alloy is formed during step E between the metal fibers and the metallic compound, wherein the eutectic alloy has a lower melting point (Tm) than the metal fibers. In order to promote the alloy formation under gentler reaction conditions, a eutectic alloy is preferably formed during step E. This is due to a eutectic alloy M-M' (M: first kind of metal; M': second kind of metal, wherein M ≠ M') having a lower temperature than a non-eutectic alloy M-M' with a different mixing ratio of M to M'. At temperatures close to the melting point of the metal fibers or higher, the metal fibers tend to melt together, lose their shape, in particular their ribbon-like shape, so that the 3D network collapses along the z-axis. The thermal treatment is therefore preferably performed at a temperature below the melting temperature of the metal fibers, preferably at a temperature 90% lower than the melting temperature of the metal fibers, preferably at a temperature 80%, 70%, 60% or 50% lower than the melting temperature of the metal fibers. The difference in temperature may depend on the kind of thermal treatment, such as subjecting the 3D network to a temperature close to or at the melting point of the metallic compound (provided that the melting point of the metallic compound is lower than the melting point of the metal fibers), subjecting the 3D network to annealing, or any other suitable thermal treatment. For example, a 3D network comprising Al-based metal fibers and a NiP-based metallic obtained in step D may be subjected to annealing at a temperature around 60% to 75% lower than the melting point of the metal fibers, Tm (Al), wherein Tm (Al) = 660 °C, and the temperature range during annealing is 400 °C to 500 °C. That way, an Al₃Ni-based eutectic alloy may be formed at the points of contact between the metallic compound and the metal fibers.

In another embodiment, Step D is performed at a temperature ranging of from 60 °C to 100 °C, preferably at a temperature ranging of from 70 °C to 85 °C. In one embodiment, Step D is performed at 70 °C. In another embodiment, Step D is performed at 75 °C. On the one hand, an elevated temperature (higher than room temperature) may be required for the metallic cation M^{Z+} shown above in equation (1) to be deposited onto the metal fibers at all, or during a reasonable reaction time. On the other hand, temperatures exceeding a temperature required for the electroless deposition reaction may result in the at least partial formation of metallic compound-based dendrites on the surface of the metal fibers. Improvement of the reaction rate and suppression of lithium dendrite growth may be achieved by electroless plating in the aforementioned temperature range. For example, electroless plating of metallic compound nickel-phosphorus (NiP) may be performed in the temperature range of from 70 °C to 85 °C. At a temperature smaller than 70 °C, no relevant plating of the metallic compound occurs, whereas at a temperature higher than 85 °C, the formation of NiP-dendrites on the metal fiber surface is promoted.

Obviously, prolonging the reaction time in Step D may enhance the amount of deposited metallic compounds. This may be beneficial when using particularly temperature-sensitive metal fibers. In this case, the temperature in Step D may be reduced while increasing the reaction time in Step D instead. A typical reaction time in Step D of the method according to the present invention is 30 minutes or more, and 150 minutes or less, preferably 45 minutes.

The metal cation in Step B) of the method according to the present invention is the cationic part of a metal salt comprising a metal cation and an anion. Any suitable metal salt may be used herein provided that it allows reduction of the metal cation M^{Z+} (oxidation state is +Z) to the elemental metal M (oxidation state is 0) in the presence of a suitable reducing agent. Depending on what metallic compound is to be plated onto the metal fibers, the choice of the metal salt may vary. In a preferred embodiment, NiSO₄ hexahydrate or CuSO₄ pentahydrate is used as metal salt in order to plate nickel (Ni) or copper (Cu) onto metal fibers during the electroless plating method. The metal cation may be based on a metal selected from the group consisting of gold (Au), silver (Ag), copper (Cu), nickel (Ni), antimony (Sb), tin (Sn), lead (Pb), or a combination thereof. The metal cation may have an oxidation state selected from the group consisting of +5, +4, +3, +2, or +1. The metal cation may preferably be selected from the group consisting of Au³⁺, Au⁺, Ag³⁺, Ag⁺, Cu²⁺, Cu⁴⁺, Ni²⁺, Sb³⁺, Sb⁵⁺, Sn⁴⁺, or Pb²⁺, more preferably Cu²⁺ or Ni²⁺. The anion of the metal salt may be selected from the group consisting of sulfur-based anions (e.g., sulfate SO₄²⁻, sulfite SO₃²⁻, thiosulfate S₂O₃²⁻, hyposulfite SO₂²⁻ and/or persulfate SO₅²⁻), halide (such as chloride Cl⁻, bromide Br and/or iodide I-), carbonate (CO₃²⁻), a hydrate thereof, a derivative thereof, or a combination thereof. The concentration of a type of metal salt in the mixture may be in the range of form 0.03 mol/L to 50 mol/L, preferably of from 0.03 mol/L to 30 mol/L, preferably of from 0.03 mol/L to 10 mol/L, preferably of from 0.03 mol/L to 1 mol/L, preferably of from 0.06 mol/L to 1 mol/L, more preferably of from 0.06 mol/L to 0.50 mol/L, also more preferably of from 0.06 mol/L to 0.30 mol/L, also more preferably of from 0.06 mol/L to 0.20 mol/L, or also more preferably of from 0.06 mol/L to 0.11 mol/L.

The reducing agent may be selected from the group consisting of phosphorus-based reducing agents, such as hypophosphite (H₂PO₂⁻), hydrazine, hydroxylamine, formaldehyde (H₂CO), boron-based reducing agents, such as organic boranes, e.g. dimethylaminoborane (H₃C)₂HNBH₃, or boranate (BH₄⁻), a salt thereof, or a combination thereof. The kind of reducing agent is not limited thereto. In a preferred embodiment, the reducing agent is sodium hypophosphite (NaH₂PO₂) or formaldehyde. The concentration of a type of reducing agent in the mixture may be in the range of form 0.03 mol/L to 80 mol/L, preferably of from 0.03 mol/L to 50 mol/L, preferably of from 0.03 mol/L to 30 mol/L, preferably of from 0.03 mol/L to 10 mol/L, more preferably of from 0.03 mol/L to 1 mol/L, more preferably of from 0.03 mol/L to 0.80 mol/L, more preferably of from 0.03 mol/L to 0.50 mol/L, more preferably of from 0.03 mol/L to 0.43 mol/L, or more preferably of from 0.06 mol/L to 0.43 mol/L. An equimolar ratio (1:1) of the reducing agent X^{Z-} and the metal cation M^{Z+} is preferable, as can be deduced from equation (1) shown above. However, the molar ratio may vary depending on the reactivity of the reducing agent and the metal cation, as well as on the extent of possible unwanted side reactions. In other cases, a molar ratio may be preferred, wherein the Depending on the kind and/or amount of side products X formed during Step D, the molar ratio may be shifted by increasing or decreasing the amount of substance (n) of the reducing agent and of the metal cation with respect to the metal cation and the reducing agent, respectively. Depending on the reducing agent, a co-plating during the electroless deposition is possible. For example, using a phosphorus and boron-based reducing agent may result to an extent of co-plating of phosphorus (P) and boron (B), respectively, onto the surface of the metal fibers. Co-plating of the reducing agent may be beneficial when alloy sections are to be formed at the linking points during the thermal treatment in optional Step E. The presence of such organic compounds may decrease the temperature of alloy formation during Step E, thereby being particularly gentle to the metal fibers. Also, it is possible these elements, such as P and B, may act as doping elements in alloy sections of the 3D network such that the electrical conductivity thereof may be further increased. This may particularly be the case when using Cu-Si metal fibers.

In another embodiment, the mixture further comprises a complexing agent. The complexing agent comprises a chelating agent. Examples of the chelating agent comprises ethylenediaminetetraacetic acid (EDTA), trisodium citrate, nitrilotriacetic acid (NTA), polyaspartic acid, tetrasodium glutamate diacetate (GLDA), methylglycine diacetic acid (MGDA), β-alanine diacetic acid (β-ADA), ethylenediaminedisuc-cinic acid, S,S-ethylenediaminedisuccinic acid (EDDS), iminodisuccinic acid (IDS), hydroxyiminodisuccinic acid (HIDS), polyamino disuccinic acids, N-bis[2-(1,2-di-carboxyethoxy)ethyl]glycine (BCA6), N-bis[2-(1,2-dicarboxyethoxy)ethyl]aspartic acid (BCA5), N-bis[2-(1,2-dicarboxyethoxy)ethyl]methylglycine (MCBA5), N-tris[(1,2-dicarboxyethoxy)ethyl]amine (TCA6), N-methyliminodiacetic acid (MIDA), iminodiacetic acid (IDA), N-(2-acetamido)iminodiacetic acid (ADA), hydroxymethyl-iminodiacetic acid, 2-(2-carboxyethylamino)succinic acid (CEAA), 2-(2-carboxymethylamino)succinic acid (CMAA), diethylenetriamine-N,N"-disuccinic acid, triethylenetetramine-N,N‴-disuccinic acid, 1,6-hexamethylenediamine-N,N'-disuccinic acid, tetraethylenepentamine-N,N""-disuccinic acid, 2-hydroxypropylene-1,3-diamine-N,N'-disuccinic acid, 1,2-propylenediamine-N,N'-disuccinic acid, 1,3-propylenediamine-N,N'-disuccinic acid, cis-cyclohexanediamine-N,N'-disuccinic acid, trans-cyclohexanediamine-N,N'-disuccinic acid, ethylenebis(oxyethylenenitrilo)-N,N'-disuccinic acid, glucoheptanoic acid, cysteic acid-N,N-diacetic acid, cysteic acid-N-monoacetic acid, alanine-N-monoacetic acid, N-(3-hydroxysuccinyl)aspartic acid, N-[2-(3-hydroxysuccinyl)]-L-serine, aspartic acid-N,N-diacetic acid, aspartic acid-N-monoacetic acid, a salt thereof (in particular an alkali metal salt thereof), a derivative thereof, or a combination thereof. In a preferred embodiment, the chelating agent is ethylenediaminetetraacetic acid (EDTA), trisodium citrate, nitrilotriacetic acid (NTA), iminodisuccinic acid (IDS), polyaspartic acid, S,S-ethylenediamine-N,N'-disuccinic acid (EDDS), methylglycinediacetic acid (MGDA), tetrasodium glutamate diacetate (GLDA), a salt thereof (in particular an alkali metal salt thereof), a derivative thereof, or a combination thereof. The chelating agent is not limited thereto. A salt of EDTA may be disodium EDTA, sodium calcium EDTA, or tetrasodium EDTA, preferably disodium EDTA. In a preferred embodiment, the complexing agent is disodium EDTA and/or trisodium citrate. The complexing agent may be useful to enhance the solubility of metal cations M^{Z+} poorly soluble in the mixture further comprising a reducing agent, preferably wherein the mixture is a (aqueous) solution. The concentration of a type of chelating agent in the mixture may be in the range of form 0.005 mol/L to 1 mol/L, preferably of from 0.005 mol/L to 0.50 mol/L, preferably of from 0.010 mol/L to 0.30 mol/L, more preferably of from 0.010 mol/L to 0.20 mol/L, also more preferably of from 0.010 mol/L to 0.15 mol/L, more preferably of from 0.015 mol/L to 0.15 mol/L, or more preferably of from 0.019 mol/L to 0.12 mol/L.

In another embodiment, at least during step D the mixture flows through the plurality of metal fibers. This may be achieved by different means. One Example for flowing the mixture through the plurality of metal fibers is by placing the metal fibers onto of a filter and letting the mixture flow through the plurality of metal fibers from the top. The mixture may then be collected below the filter and recycled back to the top of the metal fibers. The mixture may penetrate the metal fibers either due to gravitational force or by applying a pressure on top of the metal fibers, so that the mixture is pressed therethrough or by applying a vacuum below the filter, so that the mixture is sucked through the mental fibers. The wording "flow through the plurality of metal fibers" herein indicates that the mixture flows through voids between the metal fibers which are loosely arranged, i.e. not yet fixed to one another. This step is preferably used during step E in order to mechanically remove gas bubbles, such as hydrogen gas, formed during the chemical reaction of electroless plating. That way, an inhibition of the plating reaction due to gas bubbles on the surface of the metal fibers can be prevented and thereby improving the plating of the metallic compound. The flow rate may be 300 mL/min, preferably 400 mL/min or more, such as 420 mL/min, 450 mL/min, and 500 mL/min or more.

In another embodiment, the aspect ratio of the metal fibers prior to electroless deposition is substantially equal to the aspect ratio of the metal fibers after said electroless deposition. The aspect ratio is the ratio of the width (W) to the thickness (T) of the metal fibers. Thereby, the aspect ratio of the metal fibers is at least substantially unchanged prior to and after the electroless deposition. This is preferably achieved by limiting the reaction temperature during Step D. That way, the non-round cross-sections of the metal fibers may be retained, in particular the ribbon-like flat shape thereof.

The present invention also concerns a battery, comprising at least one electrode having a 3D network according to the present invention. The 3D network of the present invention may be utilized in many different kinds of batteries. It is preferred that the 3D network is used in a secondary battery or a primary battery. The secondary battery is preferably a lithium-ion battery or a sodium-ion battery, but is not limited thereto. The lithium-ion battery is preferably a lithium metal battery, but is not limited thereto. Lithium batteries can be either rechargeable, i.e. secondary batteries, or non-rechargeable, i.e. primary batteries. Examples for primary lithium metal batteries are a LiSOCl₂, LiMnO₂, LiSO₂, LiI₂, Li(CF)ₙ, LiFeS₂ type batteries. Li(CF)ₙ stands for Lithium-carbon monofluoride (IEC-system letter B), i.e. (CF)ₙ stands for carbon monofluoride (CAS Registry Number: 51311-17-2).

In a preferred embodiment, the electrode having a 3D network according to the present invention comprises a single layer of said 3D network of metal fibers. That is, a single-layered electrode having a 3D network according to the present invention.

The invention will now be described in further detail and by way of example only with reference to the accompanying drawings and figures as well as by various examples of the network and method of the invention. In the drawings there are shown:
Fig. 1 a schematic drawing illustrating the dimensions (x- and y-plane, z-axis) of a three-dimensional network of metal fibers according to the present invention. An illustrative part of the schematic network is magnified and shows a scanning electron microscope image of a network of metal fibers according to this invention.
Fig. 2 schematic drawing illustrating a cross-section of a metal fiber having a thickness T and a width W according to an embodiment of the present invention.
Fig. 3 a 3D network of Example 1 in accordance with the present invention (with optional cleansing treatment in Step C0) shown in the x-y plane.
Fig. 4 a 3D network of Example 1-1 in accordance with the present invention (invention (with optional cleansing treatment in Step C0) shown in the x-y plane.
Fig. 5 a metallic compound in the form of spherical particles on the metal fibers in a scanning electron microscope image of a 3D network of metal fibers in accordance with Example 1.
Fig. 6 a scanning electron microscope image of a 3D network of metal fibers in accordance with Example 1.
Fig. 7 a scanning electron microscope image of a ruptured 3D network of metal fibers in accordance with Example 1-2.
Fig. 8 a scanning electron microscope image of a 3D network of metal fibers in accordance with Example 3.
Fig. 9 a linking point of two (2) metal fibers in a scanning electron microscope image of a 3D network of metal fibers in accordance with Example 3.
Fig. 10 a linking point of two (2) metal fibers in a scanning electron microscope image of a 3D network of metal fibers in accordance with Example 3.
Fig. 11 two (2) adjacent linking points on the same metal fiber: linking point 1 of two (2) metal fibers (dotted circle) and linking point 2 of three (3) metal fibers (continuous circle) in a scanning electron microscope image of a 3D network of metal fibers in accordance with Example 3.
Fig. 12 a network structure of Comparative Example 1 shown in the x-y plane.
Fig. 13 a scanning electron microscope image of a network structure in accordance with Comparative Example 2.
Fig. 14 a voltage and current profile of a battery cell in accordance with the present invention.
Fig. 15 a graph of capacities and Coulomb efficiencies of charge and discharge cycles at 0.2 - 2.0 C of a battery cell in accordance with the present invention.

For reasons of clarity, in some figures not all or no reference signs are shown.

In Fig. 1 a 3D network 1 of the present invention is schematically illustrated. The illustrated 3D network 1 is porous as can be seen in the magnified image depicting an illustrative unit of the schematic 3D network 1, i.e. there are void portions between the metal fibers. These void portions are also referred to as pores. The 3D network expands in an x-y plane, as illustrated by the coordinate system in Fig. 1. During sintering close to or above the melting point of the metal fibers, the metal fibers typically collapse such that the height, i.e. thickness, of the 3D network in the z-axis reduces.

In Fig. 2 a non-round cross-section of a metal fiber is shown. The width (W) is higher than the thickness (T) of the metal fiber so that a ribbon-like flat cross-section is formed. A ribbon-like flat cross-section may also be obtained for when W is smaller than T. It is also possible that the cross-section is round, i.e., the width (W) and the thickness (T) are substantially equal to another.

The following Examples further illustrate the present invention:
Network structures, i.e., nonwoven, of metal fibers obtained from a melt spinning process were produced based on the method described in US 2021/0265636 A1.

Thickness and width of metal fibers as mentioned herein can be determined either by scanning electron microscopy or by micro CT. Melting points of metal fibers can be determined by DSC. Voltage and current profiles as well as discharge capacities and Coulomb efficiencies of a battery cell were obtained by galvanostatic cycling with potential limitation (0.1 - 2.0 C cycling rates, 2.8 - 4.3 V).

### Comparative Example 1

### Network structure of Al metal fibers

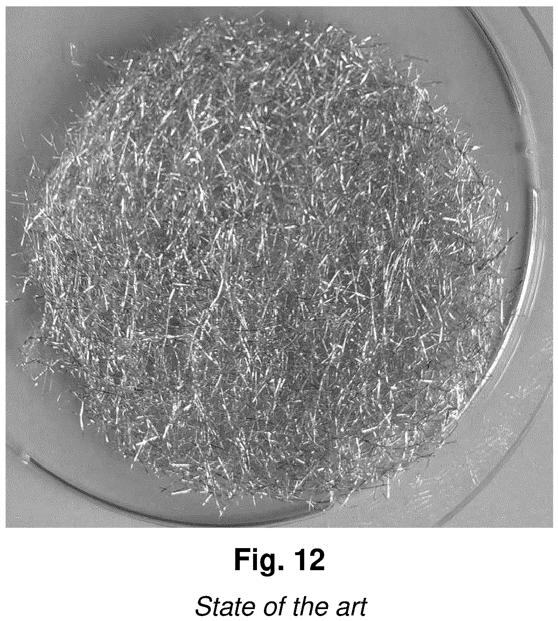

A network structure of aluminum (Al) ribbon-like flat fibers (approx. 100 µm wide and 8 µm thick, aspect ratio of 12.5:1) was obtained as described above. In Fig. 12 said nonwoven is shown.

### Comparative Example 2

### Network structure of CuSi metal fibers

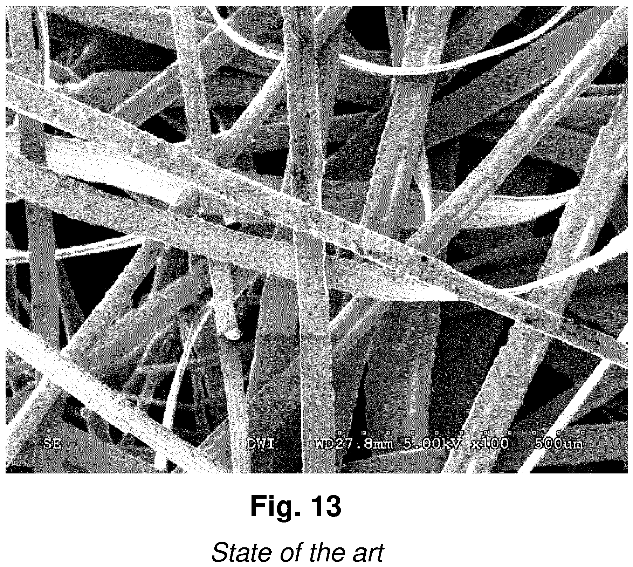

A network structure of copper-silicon (CuSi) ribbon-like flat fibers (approx. 100 µm wide and 8 µm thick, aspect ratio of 12.5:1) was obtained as described above. In Fig. 13 the ribbon-like flat structure of the metal fibers is shown.

### General procedure

A general procedure for the production method of a 3D network according to the present invention was performed in the Examples as follows:
A network structure, i.e., nonwoven, of metal fibers (Al, AlNi, Ti, CuSi or Cu) was optionally cleansed by soaking in sulfuric acid (H₂SO₄, 20%; for Al, AlNi or Ti) or phosphoric acid (H₃PO₄, 85%; for CuSi or Cu) for 20 minutes, rinsed with water and ethanol, and then dried. The optionally cleansed network structure was immersed in a mixture comprising metal cations (Ni²⁺ or Cu²⁺), a reducing agent (Ni²⁺: NaPO₂H₂; Cu²⁺: formaldehyde) capable of reducing the metal cations, and optionally further comprising a complexing agent (Ni²⁺: sodium citrate dihydrate and DL-tartaric acid; Cu²⁺: disodium EDTA) and an additive, such as a pH adjuster and/or stabilizer (Cu²⁺: NaOH, bipyridyl and PEG600). The mixture was either heated after the optionally cleansed network structure was immersed therein, or alternatively the mixture was already heated prior to immersing the optionally cleansed network structure. The mixture was allowed to circulate through the network structure. After a reaction time, the network structure was washed with water and ethanol, and then dried.

### Example 1

### Production method of 3D network comprising Al metal fibers and NiP as metallic compound

A network structure of Aluminum (Al) ribbon-like flat fibers (approx. 100 µm wide and 8 µm thick, aspect ratio of 12.5:1) was obtained as described above. An assembly of a plurality of loose metal fibers, i.e. not yet constituting a fixed network structure, was clamped in between two (2) coarse-mesh polyester webs of the same diameter. The clamped assembly of loose metal fibers was placed in a Büchner funnel of the same diameter. The funnel was immersed in a heated aqueous solution composed of a metal salt being NiSO₄ . 6 H₂O (30 g/L, 0.11 mol/L, source: Sigma Aldrich), a reducing agent being NaPO₂H₂ (10 g/L, 0.11 mol/L, source: Sigma Aldrich), and two (2) complexing agents being sodium citrate dihydrate (5 g/L, 19 mmol/L, source: Sigma Aldrich) and DL-tartaric acid (1 g/L, 7 mmol/L, source: Sigma Aldrich) (temperature of the heated aqueous solution lying in the range of from 75 °C to 85 °C). The aqueous solution was allowed to circulate through the assembly of Al metal fibers by using a pump for 120 minutes (flow rate: at least 400 mL/min). Thereafter the network structure was rinsed with water and ethanol, and then dried, thereby obtaining a 3D network of Al metal fibers and NiP as metallic compound fixating the individual fibers to one another.

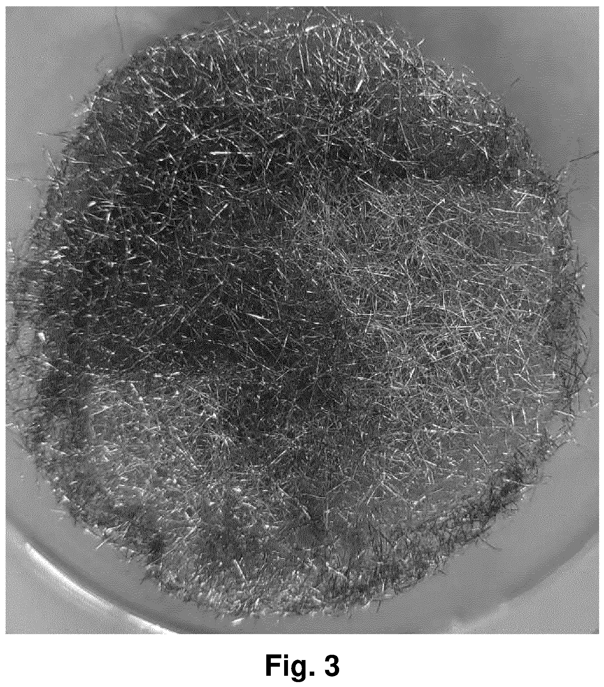

Said 3D network is shown in Fig. 3. The darker areas of the 3D network are those which were plated with NiP. The brighter surfaces of the 3D network are those which were not plated with NiP.

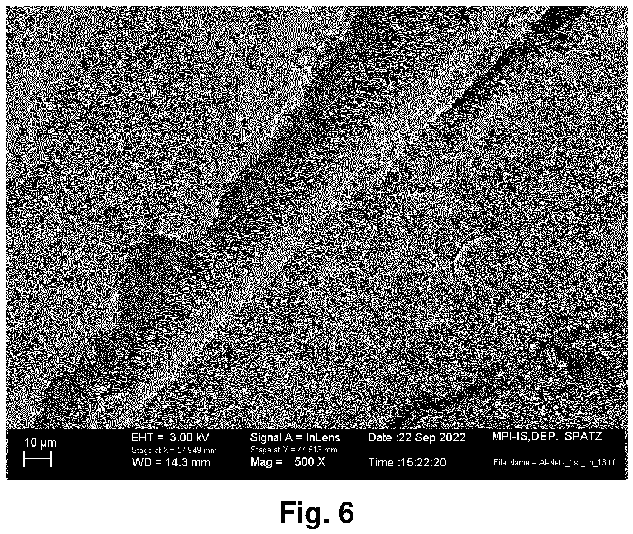

A scanning electron microscope image of a darker surface, i.e., a plated surface, of the metal fibers in the 3D network is shown in Fig. 6. The ribbon-like flat shape of the aluminum fibers can be recognized. Not only are the Al fibers at least partially covered by NiP but also three (3) individual Al metal fibers are connected by NiP. At least some of the small dark spots on the 3D network that can be seen in Fig. 6 may be unplated areas of the Al fibers being a result of gaseous bubbles formed during the electroless deposition method which were not sufficiently removed during the electroless plating reaction, e.g., by inefficient circulation (such as by pumping) of the solution through the network structure of Al. Alternatively or additionally, others of the small dark spots on the 3D network may be unplated areas of the Al fibers being a result of the absent cleansing treatment in Step C0 so that areas of the Al fibers covered by an impurity or having an oxide layer are not plated.

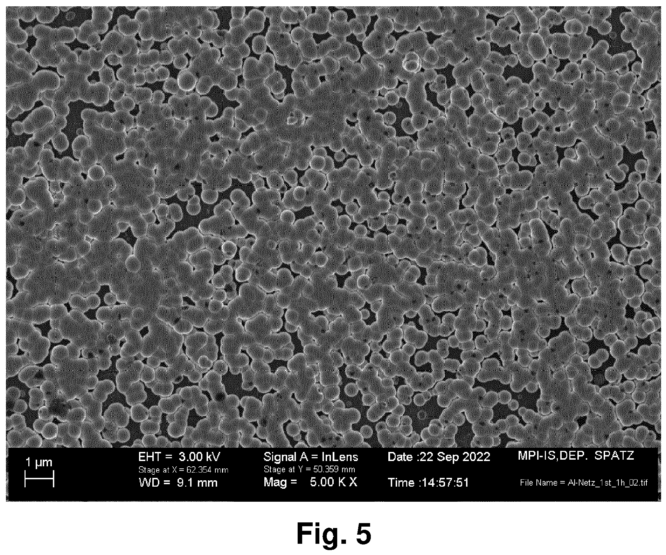

The scanning electron microscope image of a surface of the 3D network shown in Fig. 5 displays that NiP is present in the form of spherical particles (arithmetic mean diameter of approx. 500 nm). The spherical particles are formed on different layers stacked on one another, as shown. Plating of the metallic compound is therefore achieved not only on an x-y plane but also along the z-axis of a 3D network (see Fig. 1). The metallic compound may hence connect metal fibers (deep) inside the porous structure of the 3D network (and not only on the top surfaces thereof).

### Example 1-1

### With cleansing treatment

The method described in Example 1 was used, wherein prior to clamping in between two (2) coarse-mesh polyester webs of the same diameter, the loose metal fibers were soaked in sulfuric acid (H₂SO₄, 20%) for 20 minutes, rinsed with water and ethanol, and then dried.

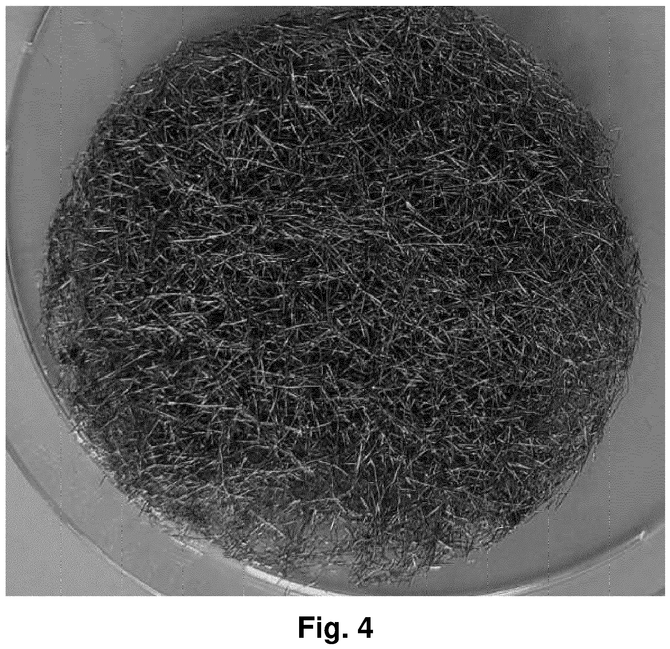

The resulting 3D network after electroless depositing NiP onto the fibers is shown in Fig. 4. In comparison to Fig. 3, in Fig. 4 shows a homogenous grey surface of the 3D network, i.e., the plating with NiP after a cleansing treatment of the metal fibers is performed is more homogenous than without the cleansing treatment. The deposition of the metallic compound on the metal fibers in the overall 3D network is therefore more uniformly distributed.

Also, the cleansing treatment shortens the reaction time for plating, i.e., faster plating.

### Example 1-2

### Rupture in 3D network

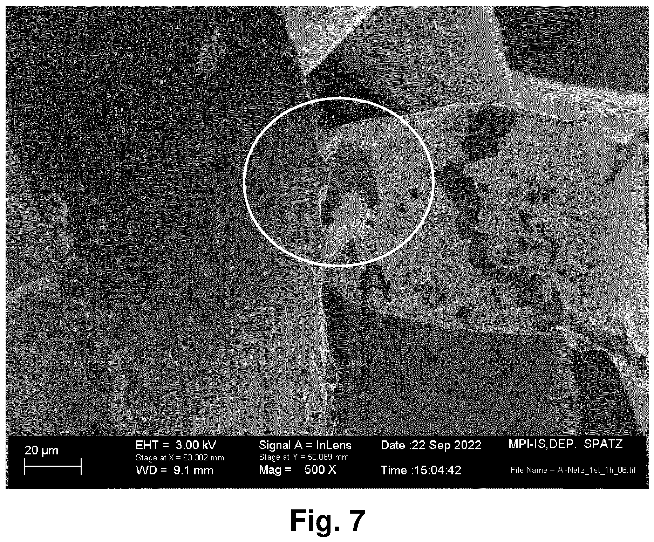

The 3D network obtained in Example 1-1 was ruptured. As shown in Fig. 7, as a result thereof, the metal fibers may at least partially be disconnected at the linking points (emphasized by circle). This shows that the metal fibers were actually connected by NiP. Furthermore, Fig. 7 clearly presents the aluminum fibers in the non-round shape, i.e., ribbon-like flat shape. The ribbon-like flat shape of the aluminum network structure used as starting material is hence retained after the electroless plating process.

### Example 2

### Production method of a 3D network comprising AlNi metal fibers and NiP as metallic compound

In this example, the same production method described in Example 1-1 was carried out, however with a network structure of aluminum-nickel (AlNi) ribbon-like flat fibers (approx. 100 µm wide and 8 µm thick, aspect ratio of 12.5:1) instead.

The method of Example 1 may be applied instead, however the cleansing treatment in Example 1-1 provides for a more uniform distribution of NiP on the AlNi fibers. Also, the cleansing treatment shortens the reaction time for plating, i.e., faster plating.

### Example 3

### Production method of 3D network comprising CuSi metal fibers and Cu as metallic compound

A network structure of copper-silicon (CuSi) ribbon-like flat fibers (approx. 100 µm wide and 8 µm thick, aspect ratio of 12.5:1) was obtained as described above. An assembly of a plurality of loose metal fibers, i.e. not yet constituting a fixed network structure was clamped in between two (2) coarse-mesh polyester webs of the same diameter. The clamped assembly of loose metal fibers was placed in a Büchner funnel of the same diameter. The funnel was immersed in a heated aqueous solution composed of a metal salt being CuSO₄ . 5 H₂O (15 g/L, 0.06 mol/L, source: Sigma Aldrich), a reducing agent being formaldehyde (13 g/L, 0.43 mol/L, source: Sigma Aldrich), a complexing agent being disodium EDTA (45 g/L, 0.12 mol/L, Sigma Aldrich), a pH regulator being NaOH (10 g/L, 0.25 mol/L, Sigma Aldrich), and two (2) stabilizers being bipyridyl (30 mg/L, 0.20 mmol/L, Sigma Aldrich) and PEG600 (50 mg/L, 0.08 mmol/L, Sigma Aldrich) (temperature of the heated aqueous solution: 70 °C The aqueous solution was allowed to circulate through the assembly of CuSi ribbon-like metal fibers by using a pump for 45 minutes (flow rate: about 400 mL/min). The heated network structure was rinsed with water and ethanol, and then dried, thereby obtaining a 3D network comprising Al metal fibers and NiP as metallic compound.

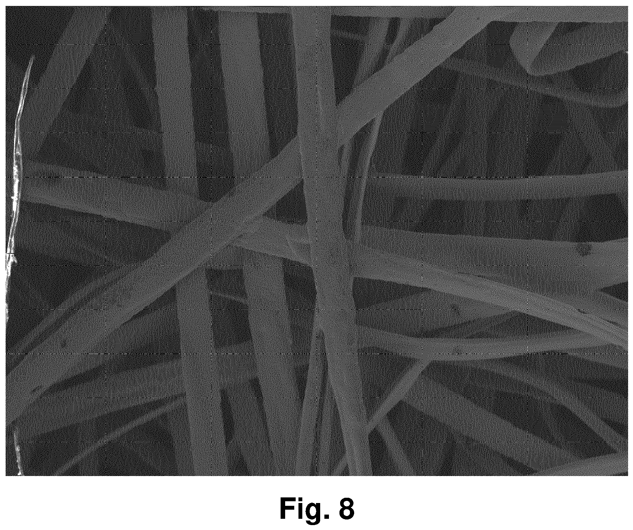

Fig. 8 shows a plurality of CuSi fibers in the 3D network obtained in Example 3. The metal fibers expand in the x-y plane and also along the z-axis (see Fig. 1). The visible metal fibers are almost completely plated with Cu which is seen by the brighter color of the metal fibers surface compared to a number of darker small spots which are also visible on the fibers. At least one part of the darker small spots on the 3D network may be unplated areas of the CuSi fibers being a result of gaseous bubbles formed during the electroless deposition method which were not sufficiently removed during the electroless plating reaction, e.g., by inefficient circulation (such as by pumping) of the solution through the network structure of CuSi. Alternatively or additionally, at least one part of the small dark spots on the 3D network may be unplated areas of the CuSi fibers being a result of the absent cleansing treatment in Step C0 so that areas of the CuSi fibers covered by an impurity or having an oxide layer are not plated.

Fig. 8 may be compared to Fig. 13, wherein Fig. 13 shows the loose assembly of CuSi fibers before being subjected to electroless plating. Not only are the fibers in Fig. 13 brighter which indicates the unplated nature of the CuSi fibers. Also, none of the CuSi fibers in Fig. 13 are connected to one another. In contrast thereto, Fig. 8 clearly shows CuSi fibers having linking points which are a result of electroless plating with Cu. Last but not least, it is demonstrated that the ribbon-like flat shape of the metal fibers is not impaired by the herein described electroless plating process. Both, Fig. 8 and Fig. 13, display ribbon-like flat shaped CuSi fibers, while only the ones in Fig. 8 were subjected to a process in order to mechanically and electrically conductively connect the CuSi fibers to one another.

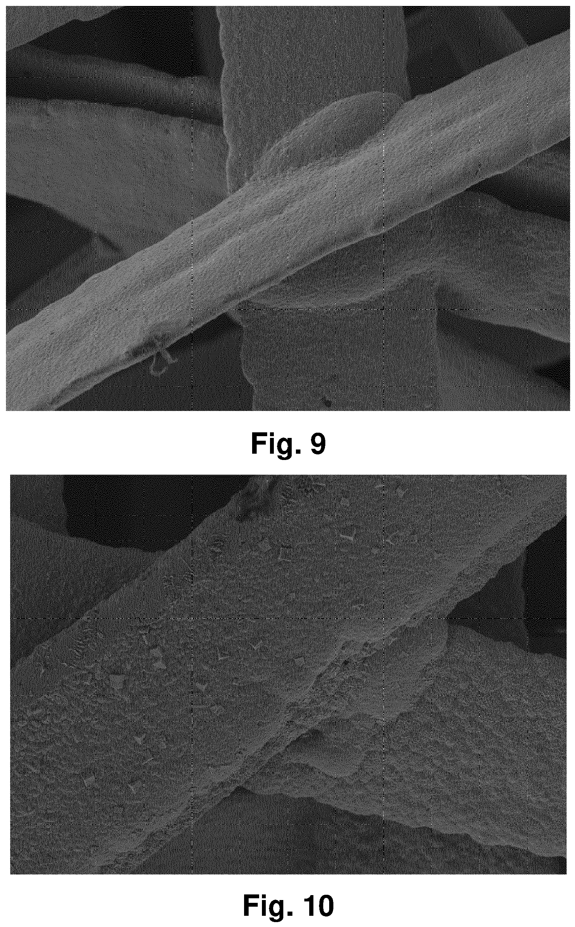

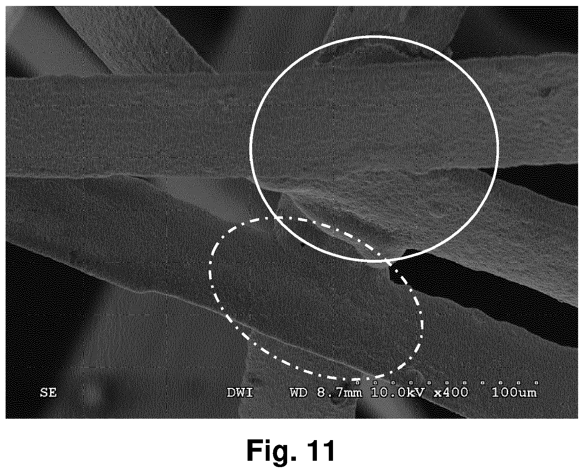

Further scanning electron microscopy images of linking points of CuSi fibers in the 3D network further comprising Cu as metallic compound are shown in Fig. 9 to Fig. 11. The fibers shown in these figures also show that they are almost completely covered by copper, thereby not only forming the linking points but also being entirely coated with copper. In Fig. 9 three (3) CuSi fibers are connected by Cu, wherein the electroless deposited Cu is visible as a drop like substance, joining sections of three CuSi fibers together. In Fig. 10 two (2) CuSi fibers are connected by Cu, wherein the latter is visible as an aggreagation, joining sections of both CuSi fibers together. Furthermore, the on top lying CuSi fiber is partially covered with copper dendrites which may be an indication for a rapid deposition of copper. The formation of such dendrites is not limit to copper but can also be observed with NiP as metallic compound. In Fig. 11, four (4) CuSi fibers are connected by Cu, wherein the latter is at least partially visible as a drop-like appearance, joining sections of these CuSi fibers together.

### Example 3-1

### With cleansing treatment

The method described in Example 3 was used, wherein prior to clamping in between two (2) coarse-mesh polyester webs of the same diameter, the metal fibers were soaked in phosphoric acid (H₃PO₄, 85%) for 20 minutes, rinsed with water and ethanol, and then dried.

The resulting 3D network of CuSi fibers has a particularly uniform deposition of copper. Also, the cleansing treatment shortens the reaction time for plating, i.e., faster plating.

### Example 4

### Production method of a 3D network comprising Cu metal fibers and Cu as metallic compound

In this example, the same production method described in Example 3-1 was carried out, however with a network structure of copper (Cu) ribbon-like flat fibers (approx. 100 µm wide and 8 µm thick, aspect ratio of 12.5:1) instead.

The method of Example 3 may be applied instead, however the cleansing treatment in Example 3-1 provides for a more uniform distribution of Cu on the Cu fibers.

### Example 5

### Production method of an electrode having a 3D network comprising Al metal fibers and NiP as metallic compound

A 3D network comprising Al metal fibers and NiP as metallic compound was obtained according to Example 1 with the difference that the starting material being the network structure of Aluminum (Al) ribbon-like flat fibers had different dimensions: approx. 40 to 60 µm wide and 15 µm thick, aspect ratio of 2.67: 1 to 4:1). Said network structure was obtained as described above.

The obtained 3D network comprising Al metal fibers and NiP as metallic compound was further characterized by having a surface density of 20 mg/cm².

Said 3D network was mixed with lithium cobalt oxide (LCO 97A; source: BASF), poly-(vinylidene fluoride-co-hexafluoropropylene) (PVDF-HFP; source: Sigma-Aldrich), carbon black super P (source: Alfa Aesar) and graphite flakes (particle size of 7-10 µm; source: Fisher Scientific) in a mass ratio of 92:3:3:2 (lithium cobalt oxide: PVDF-HFP: carbon black super P: graphite flakes). The resulting mixture was pressed to a thickness of approx. 250 µm at 160 °C, and a round electrode with a diameter of 15 mm was punched out.

### Example 6

### Production method of a battery cell

The electrode obtained in Example 5 was installed together with a lithium chip (diameter: 15.6 mm), separated by a glass fiber separator (diameter: 16 mm) into a button cell with 20 mm diameter (R2032 type). As electrolyte about 100 µL of 1M LiPF₆ in a 1:1 ratio of ethylene carbonate:dimethyl carbonate (source: Sigma-Aldrich) was used.

The theoretical capacity of the button cell, i.e., battery cell, was 18 mAh.

### Example 7

### Evaluation of the battery cell

The battery cell obtained in Example 6 was formed after 6 hours of equilibration time for 5 CC-CV cycles at 0.1 C between 2.8 and 4.3 volts. After the fifth cycle, the real capacity of the battery cell was determined and five further charge and discharge cycles each at 0.2 C, 0.5 C, 1 C, 2 C and 0.1 C were started.

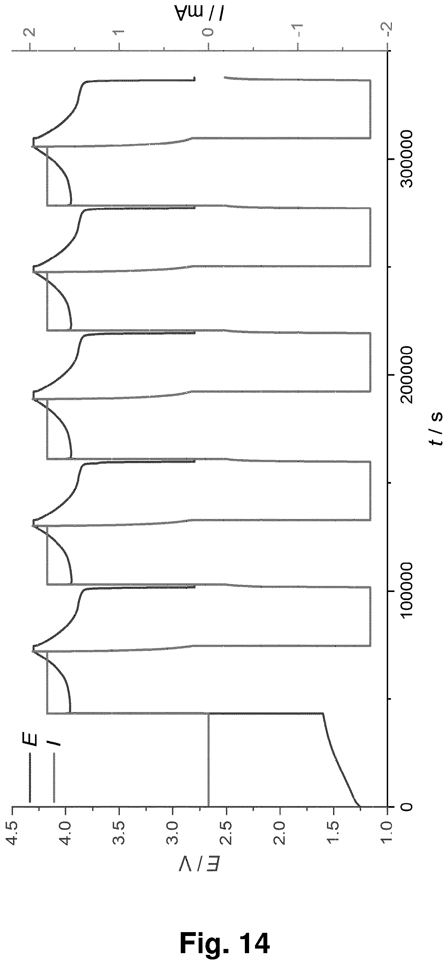

As shown in Fig. 14, the voltage and current profile of the battery cell shows a clean intercalation and deintercalation of the lithium in the lithium cobalt oxide with a short CV step during the first five (5) charge and discharge cycles. Furthermore, no side reactions of the battery components with the NiP coating are visible, which would manifest themselves in an unsteady voltage or current profile.

The measured capacity of the battery cell was 13.7 mAh after the fifth (5^{th}) discharge cycle, i.e., 76% of the theoretical capacity value determined in Example 6.

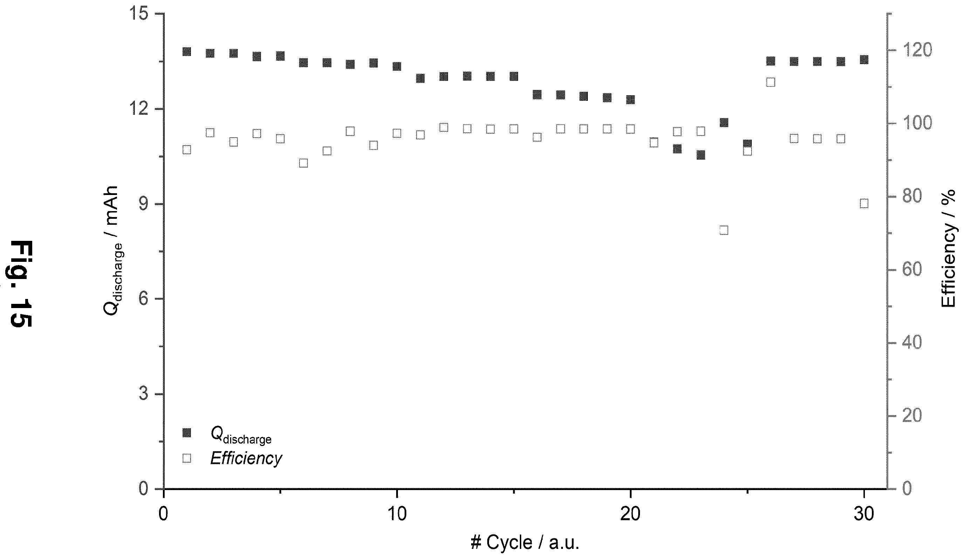

In Fig. 15, the capacities and Coulomb efficiencies of the charge and discharge cycles at 0.2 - 2.0 C are shown. After five (5) more charge and discharge cycles at 0.1 C, the capacity of the cell was 13.5 mAh, i.e., 98% of the original value of 13.7 mAh, indicating low degradation and high long-term stability of the electrode.

The following summarizes embodiments of the present invention and preferred aspects thereof, it is to be understood that these embodiments and preferred aspects are disclosed in combination with any of the claims and further features described herein:
Embodiments:
1. Three-dimensional (3D) network of metal fibers comprising a plurality of metal fibers and a metallic compound,
   wherein the plurality of metal fibers are fixed to one another by the metallic compound, and
   wherein the metal fibers are mechanically and electrically conductively connected to one another.
2. Three-dimensional (3D) network according to claim 1, wherein at least one part of the plurality of metal fibers has a width and/or thickness of 80 µm or less, preferably of 70 µm or less, more preferably of 50 µm or less, even more preferably of 40 µm or less, even more preferably of 30 µm or less, even more preferably of 10 µm or less, and most preferably of 5.0 µm or less.
3. Three-dimensional (3D) network according to claim 1 or 2, wherein at least one part of the plurality of metal fibers has a non-round cross-section, in particular a ribbon like cross-section.
4. Three-dimensional (3D) network according to any one of embodiments 1 to 3, wherein the metal fibers are based on copper, aluminum or titanium.
5. Three-dimensional (3D) network according to any one of embodiments 1 to 4, wherein the metallic compound is based on gold, silver, copper, nickel, antimony, tin or lead, preferably nickel or copper.
6. Three-dimensional (3D) network according to any one of embodiments 1 to 5, wherein the elemental composition of the metallic compound and of the metal fibers are different from one another.
7. Three-dimensional (3D) network according to any one of embodiments 1 to 6 further comprising an alloy section at a point of contact of at least two metal fibers, fixating said least two metal fibers to one another.
8. Three-dimensional (3D) network according to any one of embodiments 1 to 7, wherein the metallic compound comprises at least one element being capable of forming a eutectic with at least one element contained in the plurality of metal fibers.
9. Three-dimensional (3D) network according to any one of embodiments 1 to 8, wherein the redox potential of a metal contained in the metallic compound is equal to or higher than the redox potential of a metal contained in the plurality of metal fibers.
10. Three-dimensional (3D) network according to any one of embodiments 1 to 9, wherein the metallic compound is present in the form of a spherical particle, preferably wherein the spherical particle has an arithmetic mean diameter of 500 nm or less.
11. Three-dimensional (3D) network according to any one of embodiments 1 to 10, wherein the metal fibers are copper-based fibers, in particular copper-silicon (CuSi) or copper (Cu) fibers, and the metallic compound is copper (Cu); or
   wherein the metal fibers are aluminum-based (Al) fibers, in particular aluminum fibers, and the metallic compound is nickel (Ni) or nickel phosphorus (NiP), or
   wherein the metal fibers are aluminum nickel (AlNi) fibers and the metallic compound is nickel (Ni) or nickel phosphorus (NiP), or
   wherein the metal fibers are titanium-based (Ti) fibers, in particular titanium (Ti) fibers, and the metallic compound is nickel (Ni) or nickel phosphorus (NiP).
12. Three-dimensional (3D) network according to any one of embodiments 1 to 11, wherein the network is an unordered network.
13. Method of producing a three-dimensional (3D) network of metal fibers by electroless deposition, comprising the steps of
   Step A: providing a plurality of metal fibers,
   Step B: providing a mixture comprising metal cations and a reducing agent capable of reducing the metal cations,
   Step C: subjecting the plurality of metal fibers to the mixture, and
   Step D: depositing the metal cations in the form of reduced metals on the plurality of metal fibers, thereby providing the three-dimensional (3D) network of metal fibers.
14. The method according to embodiment 13, wherein the deposition in step D is performed in the absence of electric current, voltage and/or electric power.
15. The method according to embodiments 13 or 14 further comprising Step C0 prior to Step C, wherein Step C0 is a cleansing treatment of the plurality of metal fibers, preferably wherein the cleansing treatment is a treatment of the plurality of metal fibers with an oxoacid, preferably wherein the oxoacid is an inorganic oxoacid, in particular sulfuric acid or phosphoric acid.
16. The method according to any one of embodiments 13 to 14 further comprising Step E, wherein Step E is a thermal treatment of the three-dimensional (3D) network of metal fibers obtained in Step D.
17. The method according to any one of embodiments 13 to 16, wherein Step D is performed at a temperature ranging of from 60 °C to 100 °C, preferably of from 70 °C to 85 °C.
18. The method according to any one of embodiments 13 to 17, wherein the reducing agent is selected from the group consisting of phosphor-based reducing agents, such as hypophosphite (H₂PO₂⁻), formaldehyde (H₂CO), boron-based reducing agents, such as organic boranes, e.g. dimethylaminoborane (H₃C)₂HNBH₃, or boranate (BH₄⁻), or a combination thereof.
19. The method according to any one of embodiments 13 to 18, wherein the mixture further comprises a complexing agent comprising a chelating agent, wherein the chelating agent comprises trisodium citrate and/or disodium ethylenediaminetetraacetic.
20. The method according to any one of embodiments 13 to 19, wherein at least during step E the mixture flows through the plurality of metal fibers.
21. The method according to any one of embodiments 13 to 20, wherein the aspect ratio of the metal fibers prior to electroless deposition is substantially equal to the aspect ratio of the metal fibers after said electroless deposition.
22. Three-dimensional (3D) network of metal fibers, in particular according to any one of embodiments 1 to 12, obtainable by a method according to any one of embodiments 13 to 21.
23. Electrode having a three-dimensional (3D) network of metal fibers according to any one of embodiments 1 to 12.
24. The electrode according to embodiment 23, wherein said electrode is a single layer.
25. Battery comprising at least one electrode according to embodiment 23 or 24, preferably wherein the battery is a secondary battery, in particular a lithium-ion battery, such as a rechargeable lithium metal battery, or a sodium-ion battery, or a primary battery, in particular a lithium metal battery, such as a LiSOCl₂, LiMnO₂, LiSO₂, LiI₂, Li(CF)ₙ, LiFeS₂ type battery.
26. Filter having a three-dimensional (3D) network of metal fibers according to any one of embodiments 1 to 12.
27. Catalyst having a three-dimensional (3D) network of metal fibers according to any one of embodiments 1 to 12.

### Reference signs

- 1: Three-dimensional (3D) network
- 2: Metal fiber
- T: Thickness
- W: Width

## Claims

1. Three-dimensional (3D) network of metal fibers comprising
a plurality of metal fibers and a metallic compound,
wherein the plurality of metal fibers are fixed to one another by the metallic compound, and
wherein the metal fibers are mechanically and electrically conductively connected to one another.

2. Three-dimensional (3D) network according to claim 1, wherein the network is an unordered network, in particular the network is a nonwoven, and/or wherein at least one part of the plurality of metal fibers has a width and/or thickness of 80 µm or less, preferably of 70 µm or less, more preferably of 50 µm or less, even more preferably of 40 µm or less, even more preferably of 30 µm or less, even more preferably of 10 µm or less, and most preferably of 5.0 µm or less.

3. Three-dimensional (3D) network according to claim 1 or 2, wherein at least one part of the plurality of metal fibers has a non-round cross-section, in particular a ribbon like cross-section.

4. Three-dimensional (3D) network according to any one of claims 1 to 3, wherein the metal fibers are based on copper, aluminum or titanium.

5. Three-dimensional (3D) network according to any one of claims 1 to 4, wherein the metallic compound is based on gold, silver, copper, nickel, antimony, tin or lead, preferably nickel or copper.

6. Three-dimensional (3D) network according to any one of claims 1 to 5,
wherein the elemental composition of the metallic compound and of the metal fibers are different from one another and/or
wherein the redox potential of a metal contained in the metallic compound is equal to or higher than the redox potential of a metal contained in the plurality of metal fibers.

7. Three-dimensional (3D) network according to any one of claims 1 to 6 further comprising an alloy section at a point of contact of at least two metal fibers, fixating said least two metal fibers to one another,
and/or wherein the metallic compound comprises at least one element being capable of forming a eutectic with at least one element contained in the plurality of metal fibers.

8. Three-dimensional (3D) network according to any one of claims 1 to 7,
wherein the metal fibers are copper-based fibers, in particular copper-silicon (CuSi) or copper (Cu) fibers, and the metallic compound is copper (Cu); or wherein the metal fibers are aluminum-based (Al) fibers, in particular aluminum fibers, and the metallic compound is nickel (Ni) or nickel phosphorus (NiP), or
wherein the metal fibers are aluminum nickel (AlNi) fibers and the metallic compound is nickel (Ni) or nickel phosphorus (NiP), or
wherein the metal fibers are titanium-based (Ti) fibers, in particular titanium (Ti) fibers, and the metallic compound is nickel (Ni) or nickel phosphorus (NiP).

9. Method of producing a three-dimensional (3D) network of metal fibers by electroless deposition, comprising the steps of
Step A: providing a plurality of metal fibers,
Step B: providing a mixture comprising metal cations and a reducing agent capable of reducing the metal cations,
Step C: subjecting the plurality of metal fibers to the mixture, and
Step D: depositing the metal cations in the form of reduced metals on the plurality of metal fibers, thereby providing the three-dimensional (3D) network of metal fibers.

10. The method according to claim 9, wherein Step D is performed at a temperature ranging of from 60 °C to 100 °C, preferably of from 70 °C to 85 °C and/or
wherein the reducing agent is selected from the group consisting of phosphor-based reducing agents, such as hypophosphite (H₂PO₂⁻), formaldehyde (H₂CO), boron-based reducing agents, such as organic boranes, e.g. dimethylaminoborane (H₃C)₂HNBH₃, or boranate (BH₄⁻), or a combination thereof and/or
wherein the mixture further comprises a complexing agent comprising a chelating agent, wherein the chelating agent comprises trisodium citrate and/or disodium ethylenediaminetetraacetic.

11. The method according to claim 9 or 10, wherein at least during step E the mixture flows through the plurality of metal fibers.

12. Three-dimensional (3D) network of metal fibers, in particular according to any one of claims 1 to 8, obtainable by a method according to any one of claims 9 to 11.

13. Electrode having a three-dimensional (3D) network of metal fibers according to any one of claims 1 to 9.

14. Battery comprising at least one electrode according to claim 12, preferably wherein the battery is a secondary battery, in particular a lithium-ion battery, such as a rechargeable lithium metal battery, or a sodium-ion battery, or a primary battery, in particular a lithium metal battery, such as a LiSOCl₂, LiMnO₂, LiSO₂, LiI₂, Li(CF)ₙ, LiFeS₂ type battery.

15. Filter or catalyst having a three-dimensional (3D) network of metal fibers according to any one of claims 1 to 9.
